# EUROPEAN PATENT SPECIFICATION

(11) **EP 3 308 652 B1**
(45) Date of publication and mention of the grant of the patent: **09.06.2021**
(21) Application number: 16849023.3
(22) Date of filing: 23.09.2016
(51) Int. Cl.: A23K 20/147, A23K 20/189, A23K 10/12, A23K 10/14, A23K 10/30, A23J 1/00

(54) **METHOD FOR CONCENTRATING PROTEIN IN GRAIN POWDER**
VERFAHREN ZUR KONZENTRATION VON PROTEIN IN GETREIDEPULVER
PROCÉDÉ DE CONCENTRATION DE PROTÉINE DANS UNE POUDRE DE GRAINS

(30) Priority: 25.09.2015 KR 20150136600; 16.03.2016 KR 20160031463
(43) Date of publication of application: 18.04.2018
(73) Proprietor: CJ Cheiljedang Corporation, Seoul 04560 (KR)
(72) Inventor: SEO, Hyo Jeong, Incheon 22226 (KR); HONG, Young Ho, Suwon-si Gyeonggi-do 16708 (KR); CHO, Seong Jun, Seoul 04971 (KR); KANG, Kyeong Il, Incheon 22741 (KR); RYU, Je Hoon, Seoul 06999 (KR); PARK, Seung Won, Yongin-si Gyeonggi-do 16894 (KR); HAN, Sung Wook, Seoul 05507 (KR)
(74) Representative: Jostarndt Patentanwalts-AG
(86) International application number: PCT/KR2016/010705
(87) International publication number: WO 2017/052298

(56) References cited:
- CN-A- 1 552 233
- DE-A1- 2 513 221
- KR-A- 20000 040 640
- KR-A- 20080 081 892
- KR-A- 20130 084 804
- KR-A- 20140 061 915
- KR-B1- 101 317 549
- US-A1- 2005 003 044
- US-A1- 2013 274 443
- S Viswanathan ET AL: "Production and Medium Optimization of Amylase by Bacillus Spp Using Submerged Fermentation Method", World Journal of Chemistry, 1 January 2014 (2014-01-01), pages 1-6, XP055526062, DOI: 10.5829/idosi.wjc.2014.9.1.76128 Retrieved from the Internet: URL:https://pdfs.semanticscholar.org/6787/ a347bee788cfa8dcba8d6f265e2d7af59fba.pdf

## Description

### BACKGROUND

### 1. Field

The present disclosure relates to a method of concentrating protein in grain powder including treating grain powder with an enzyme to decompose structural carbohydrate.

### 2. Description of the Related Art

Grain is widely used as stockfeed, since the energy content is high, and thus, feed efficiency is high, and the crude fiber content is low, and thus, digestibility is good. However, grain feed has a low protein ratio and a low amino acid ratio. Accordingly, to obtain balanced nutrition, grain feed needs to be supplemented with a protein and amino acids. For use as a protein source, an animal protein source, such as fish powder, skim milk powder, meat powder, or blood powder, and a vegetable protein source, such as soybean, canola, or flax, are used. From among vegetable protein sources, corn gluten is a by-product that is generated in the manufacturing procedure of corn starch. Corn gluten has a protein content that is similar to that of fish powder having a high protein content (about 3 times as high as a general vegetable protein source), and is inexpensive. Due to these features of corn gluten, corn gluten is widely used as a protein source for feed.

KR 2014 0061915 A discloses a novel microorganism Bacillus coagulans KM-1 and a manufacturing method of fermented soybean meal and fish feed using the same. US 2005/003044 A1 discloses a method for fermenting soybeans comprising treatment with *L. plantarum* as well as cellulases and hemicellulases. DE 25 13 221 A1 discloses a process for the production of protein for the manufacture of animal feed. S. Viswanathan et al., World Journal of Chemistry, 1 January 2014, pages 1-6 describe the production and medium optimization of amylase by bacillus Spp using submerged fermentation method. US 2013/274443 A1 discloses methods of producing a protein concentrate from a starch containing grain and uses thereof. KR 2000 0040640 A discloses the production of fermentation feed for livestock or fishes from materials such as fish powder removed of fat, cuttlefish intestines, defatted soybean, rice bran, and wheat bran. KR 101 317 549 B1 discloses a method for fermenting corn gluten by inoculating corn gluten with *Bacillus subtilis* and performing fermentation. CN 1552233 A discloses a method for producing a multi-dimensional multi-enzyme high-protein feed by using a plurality of strains mixed culture solid-state fermentation.

According to prior studies, due to microbial protease or commercially available enzyme, corn gluten protein is degraded into peptides, and, by inoculating microorganism into corn gluten, protein is degraded into low-molecular weight peptides and at the same time, a protein content ratio is slightly increased.

However, since the water-soluble saccharide content in a source material is small, the protein content ratio increase effects in corn gluten during fermentation is as low as about 2% to 3%. Accordingly, solid-state fermentation of corn gluten leads only to degrading major proteins into peptides.

According to the present disclosure, a method of preparing a material having such a protein content ratio that the material can replace for commercially available fish powder is provided, as non-protein components contained in corn gluten are treated with an enzyme and removed by microorganism, the protein content ratio in corn gluten is increased.

### SUMMARY

Provided are methods of concentrating protein in grain powder including treating grain powder with an enzyme to decompose structural carbohydrate, as defined in the appended claims.

Additional aspects will be set forth in part in the description which follows and, in part, will be apparent from the description, or may be learned by practice of the presented embodiments.

A first aspect of the present invention is a method of concentrating protein in grain powder, the method comprising: adding a base solution to grain powder to adjust a pH that is optimal for the growth of bacteria in the grain powder; treating the grain powder with a-amylase or glucoamylase to decompose structural carbohydrate, wherein the structural carbohydrate comprises at least one selected from the group consisting of starch, cellulose, hemicellulose, or pectin; and inoculating the bacteria into the corn gluten to perform fermentation; wherein the bacteria are of the genus Bacillus or the genus Lactobacillus, and wherein the grain powder is corn gluten.

The "grain powder" is corn gluten, a product obtained by drying and milling the residual of pure grain after being used in a punching process. Grain powder, used in the present disclosure, may be an identical kind of grain powder produced in an identical area. However, the difference in quality of grain powder does not affect results obtained according to the present disclosure.

The grain powder is corn gluten. The corn gluten refers to yellow powder that is obtained by, in producing starch from corn, extracting starch and germ from corn and separating corn bran from the result, followed by dehydrating and drying. In other words, the corn gluten refers to the residual that is generated in the course of preparing corn starch. A protein content ratio in the corn gluten is about 35% to 65%, which is three times as high as that of a general feed. Accordingly, the corn gluten is used as a protein source for feed.

The term "enzyme" used herein refers to an enzyme that decomposes structural carbohydrate in grain powder.

The enzyme is the starch-decomposing enzyme α-amylase or glucoamylase. In one embodiment, the starch-decomposing enzyme may be glucoamylase.

In one embodiment of the present disclosure, the enzyme may be selected by enzyme screening. Commercially available enzymes have different enzymatic activities and different enzymatic reaction conditions. Accordingly, an enzyme that is optimized for grain powder, which is a source material, can be selected by enzyme screening. The enzyme screening may be conducted by reacting a source material with an enzyme, sampling the reaction at a given time and measuring the amount of crude proteins in each sample, and reiterating the steps with changes in (i) the type of enzyme, (ii) the time at which an enzyme is added to a reaction, and (iii) a reaction temperature, and finally selecting the enzyme that leads to the highest final concentration of proteins in a given sample.

In one embodiment of the present disclosure, an amount of the enzyme may be in a range of 0.1 to 1 part by weight based on 100 parts by weight of the grain powder.

The term "structural carbohydrate" used herein refers to low-availability carbohydrate selected from the group consisting of starch, cellulose, hemicellulose, or pectin. In one embodiment, the structural carbohydrate may be starch.

In one embodiment of the present disclosure, structural carbohydrate in grain powder may be identified by hydrolyzing the structural carbohydrate by using, for example, an acid to obtain a monosaccharide(s) that constitutes the structural carbohydrate, and assuming a structural carbohydrate that can be constructed based on the monosaccharide(s). The term "fermentation" used herein refers to a process in which bacteria or yeast decomposes an organic material, for example, glucose by using an enzyme the bacteria or yeast has. The fermentation includes, for example, solid-state fermentation and liquid fermentation. In one embodiment, the fermentation may be solid-state fermentation.

The "solid-state fermentation" refers to a method in which bacteria spread on the surface of or inside grain powder. In the case of the solid-state fermentation, the growth of contaminants is limited due to low water vitality. Accordingly, unlike liquid fermentation, the solid-state fermentation does not cause serious contamination. When an identical strain is used to produce an enzyme by liquid fermentation or solid-state fermentation, an enzyme produced by solid-state fermentation, which has high substrate affinity, shows high activities.

In one embodiment of the present disclosure, the solid-state fermentation is performed by treating grain powder with bacteria or yeast.

The term "bacteria" used herein refers to a microorganism that ferments and has a length of 0.1 mm or less. The bacteria are from the genus *Bacillus* or the genus *Lactobacillus.* In one embodiment of the present disclosure, the bacteria may be *genus Bacillus.*

In one embodiment of the present disclosure, the *genus Bacillus* strain used for solid-state fermentation may be non-pathogenic *Bacillus genus* bacteria. In one embodiment, the non-pathogenic *genus Bacillus* may include at least one *Bacillus* strain selected from *Bacillus subtilis, Bacillus licheniformis, Bacillus toyoi, Bacillus coagulans, Bacillus polyfermenticus,* and *Bacillus amyloliquefaciens* K2G. In this case, the fermentation may be performed at a temperature of 30°C to 45°C, in one embodiment, 30°C to 40°C, or, in one embodiment, 37°C.

In one embodiment of the present disclosure, bacteria used for solid-state fermentation may be lactic acid bacteria.

The term "lactic acid bacteria" used herein refers to bacteria that ferment a saccharide to obtain energy and produce a lactic acid in great quantities.

The lactic acid bacteria are of the genus *Lactobacillus.*

In one embodiment of the present disclosure, the genus *Lactobacillus* may be at least one genus *Lactobacillus* strain selected from the group consisting of *Lactobacillus plantarum, Lactobacillus acidophilus, Lactobacillus bulgaricus, Lactobacillus casei,* and *Lactobacillus brevis.* In this case, the fermentation may be performed at a temperature of 30°C to 45°C, in one embodiment, 30°C to 40°C, or, in one embodiment, 37°C.

In one embodiment of the present disclosure, the method may further include adding a base solution to the grain powder prior to the treatment with an enzyme to obtain such a pH level that bacteria optimally grow in the grain powder. For example, when the bacteria are *Bacillus* bacteria, a pH of the bacteria, at which the bacteria optimally grow, may be in a range of 6 to 7; when the bacteria are *Lactobacillus* that is lactic acid bacteria, a pH of the bacteria, at which the bacteria optimally grow, may be in a range of 5 to 7.

The base solution may be an aqueous solution having a pH of more than 7. In one embodiment, the base solution may be a NaOH solution, a KOH solution, a NH₄OH solution, or the like. In one embodiment, the base solution may be a NaOH solution. A concentration of the NaOH solution may be in a range of 1% to 2%. The NaOH solution may be used in such an amount that after the adding of the NaOH solution, the water content of the grain powder, for example, the corn gluten is in a range of about 40% to 50%, in one amount, 41% to 45%, or, in one amount, 43%.

A second aspect of the present invention is a method of concentrating protein in grain powder, the method comprising: treating grain powder with a-amylase or glucoamylase to decompose structural carbohydrate, wherein the a-amylase or glucoamylase is used in an amount of 0.1 to 1 part by weight based on 100 parts by weight of the grain powder, and the structural carbohydrate comprises at least one selected from the group consisting of starch, cellulose, hemicellulose, or pectin; and inoculating yeast into the grain powder to perform fermentation, wherein the fermentation is solid-state fermentation, and the yeast is of the genus Saccharomyces, and wherein the grain powder is corn gluten.

The term "yeast" used herein refers to a microorganism used for fermentation, and is of the genus *Saccharomyces.*

In one embodiment of the present disclosure, genus *Saccharomyces* that is used for solid-state fermentation may be *Saccharomyces Carlsbergensis,* and in this case, the fermentation may be performed at a temperature of 20°C to 40°C, in one embodiment, 25°C to 35°C, or, in one embodiment, 30°C. Since the yeast grows slower than bacteria, the fermentation time may be in a range of 24 hours to 72 hours, in one embodiment, 36 hours to 60 hours, or, in one embodiment, 48 hours.

In one embodiment of the present disclosure, the yeast sufficiently grows in acidic conditions. Accordingly, without controlling the pH of grain powder, the enzyme treatment and the fermentation may be performed.

In one embodiment of the present disclosure, the treating the grain powder with enzyme to decompose structural carbohydrate and the inoculating the grain powder with bacteria, yeast, or lactic acid bacteria to proceed the fermentation may be sequentially performed in this stated order or at the same time. However, the order does not affect results of embodiments of the present disclosure.

Another aspect of the present disclosure which is not according to the invention and present for illustration purposes only provides grain powder that includes a protein that has been concentrated by using the method of concentrating a protein in grain powder.

The "grain powder that includes a protein that has been concentrated" may be interpreted as grain powder that has a protein content ratio being higher than before the fermentation due to the enzyme reaction and the fermentation using bacteria or yeast.

Another aspect of the present disclosure which is not according to the invention and present for illustration purposes only provides a feed additive that includes the grain powder with concentrated protein.

The "feed additive" refers to a material that is added to feed to improve productivity or health conditions of a target living organism. The feed additive may be prepared in various types known in the art, and may be used alone or together with a conventionally known feed additive. The feed additive may be added at an appropriate composition ratio to feed. The composition ratio may be determined based on the common sense and experiences in the art. The feed additive according to an embodiment may be added to feed for animals, such as chickens, pigs, monkeys, dogs, cats, rabbits, cattle, sheep, or goats, but embodiments of the present disclosure are not limited thereto.

### BRIEF DESCRIPTION OF THE DRAWINGS

These and/or other aspects will become apparent and more readily appreciated from the following description of the embodiments, taken in conjunction with the accompanying drawings in which:
FIG. 1 shows a high-performance liquid chromatography (HPLC) chromatogram of a product obtained by decomposing structural carbohydrate of corn gluten;
FIG. 2 shows an HPLC chromatogram to analyze saccharides in corn gluten in an enzyme-treated group and an enzyme-untreated group;
FIG. 3 shows protein degradability with respect to time confirmed by SDS-PAGE in an enzyme-treated group and an enzyme-untreated group when *Bacillus* was inoculated to perform fermentation;
FIG. 4 shows protein degradability with respect to time confirmed by SDS-PAGE in an enzyme-treated group and an enzyme-untreated group when yeast was inoculated to perform fermentation; and
FIG. 5 shows protein degradability with respect to time obtained by SDS-PAGE in an enzyme-treated group and an enzyme-untreated group when lactic acid bacteria were inoculated to perform fermentation.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects.

### Example 1. Corn gluten source analysis

The inventors of the present disclosure used corn gluten as a source material for solid-state fermentation. To do this, the level of water-soluble saccharide content in the source material, suitable for microorganism fermentation, was measured.

Corn gluten was dissolved in water to prepare a 10% solution, and extracted at a temperature of 60°C for 3 hours. The obtained extract was centrifuged (8,000 rpm, 10 minutes), and a supernatant was collected therefrom and filtered though a filtering sheet (Whatman No.2). The filtrate was treated with active carbon, and then, reacted at a temperature of 60°C for 30 minutes, filtered using a filtering sheet, and treated with an ion exchange (cation, anion) resin to remove ionic materials therefrom. The water-soluble saccharide content in the final sample was measured by high-performance liquid chromatography (HPLC) analysis.

The water-soluble saccharide content in corn gluten was as low as about 0.4%. As a result, it is assumed that the contribution of microorganism fermentation to a higher protein content ratio may be negligible (see Table 1).

**[Table 1]**

| Component | Glucose | Fructose | Sucrose | Total |
|---|---|---|---|---|
| Content (%) | 0.12 | 0.26 | 0.02 | 0.4 |

### Example 2. Assuming structural carbohydrate in corn gluten

After the confirming in Example 1 that the water-soluble saccharide content in the corn gluten source to be used by microorganism was very small, an enzyme treatment was performed to increase the amount of a component that can be used by the microorganism. Before enzyme-screening, the structural carbohydrate in corn gluten was decomposed to identify a major monosaccharide of carbohydrates constituting corn gluten, and a target substrate of an enzyme was assumed based on the result.

The structural carbohydrate of corn gluten was analyzed as follows: according to a component analysis method of national renewable energy laboratory (NREL), a reference material glucose, xylose, galactose, arabinose, mannose, fructose, a corn gluten source (for each sample, this analysis was performed three times) were prepared. Each of these materials was loaded in an amount of 0.3 g into a glass test tube, and then, 3 ml of 72% sulfuric acid was added thereto. The resultant tube was placed in a 30°C- water bath to perform acid hydrolysis for 2 hours, followed by stirring with a glass rod at intervals of 10 minutes to 20 minutes. 4 ml of distilled water was added to the acid hydrate test tube, and the resultant solution was loaded into another container, and distilled water was added thereto in such a way that the total weight thereof reached 80 g. For secondary hydrolysis, the first hydrate was hydrolyzed in an autoclave at a temperature of 121°C for 1 hour. A secondary hydrate was cooled, and then, calcium carbonate was added thereto to perform neutralization. The corn gluten sample was repeatedly subjected to acid hydrolysis, and the obtained acid hydrates were analyzed by using the method as described above.

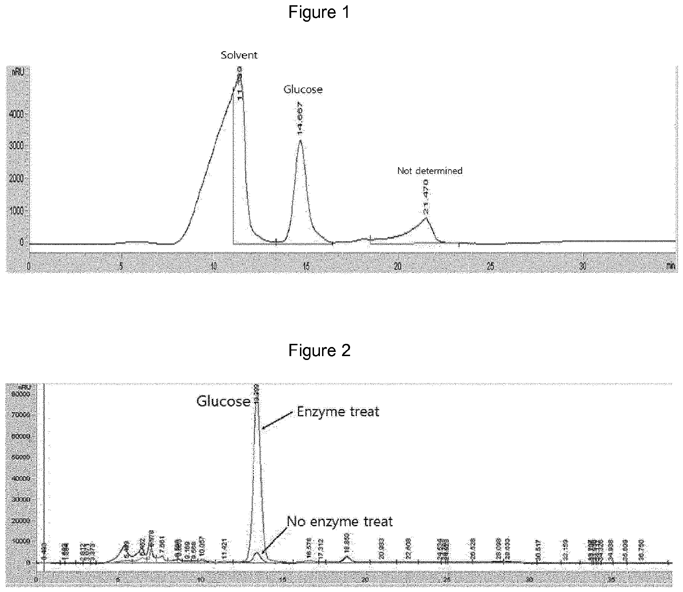

The structural carbohydrate of corn gluten was completely decomposed, and then, analyzed by HPLC. The results show that a major monosaccharide is glucose (see Table 2 and FIG. 1). That is, it is assumed that the structural carbohydrate of corn gluten is mostly starch or cellulose.

**[Table 2]**

| Monosaccharide | Repeating Number | Content (%) | Average (%) |
|---|---|---|---|
| Glucose | 1 | 19.376 | 19.318 |
| | 2 | 19.222 | |
| | 3 | 19.355 | |

### Example 3. Source component change due to enzyme treatment

The water-soluble saccharide content in the corn gluten source to be used by microorganism is very small. However, when the corn gluten source was pretreated with glucoamylase that decomposes components assumed as a major carbohydrate of corn gluten, the saccharide component of corn gluten was changed. The experimental method as used in Example 1 was performed.

In this experiment, it was confirmed that when glucoamylase, which is a starch-decomposing enzyme from among enzymes that decompose carbohydrate being insoluble in corn gluten, was used, the glucose content was increased 10 or more times. However, when the starch-decomposing enzyme was not used, the content of each of glucose, fructose, and sucrose was very small (see Table 3 and FIG. 2).

**[Table 3]**

| | Glucose (%) | Fructose (%) | Sucrose (%) | Total (%) |
|---|---|---|---|---|
| Corn gluten source | 0.61 | 0.26 | 0.00 | 0.88 |
| Enzyme treatment | 12.57 | 0.27 | 0.00 | 12.83 |

### Example 4. Preparing conditions suitable for solid-state fermentation

The carbon source for microorganism fermentation had been obtained by the enzyme-treatment. However, in general, since the pH of corn gluten is 4 or less, *Bacillus* strain does not grow therein. So, in the present experiment, to ferment corn gluten by inoculation with *Bacillus* strain, the pH of corn gluten was adjusted to be in a range of 6 to 7, which is the optimal range for the growth of bacillus.

First, while the water content of corn gluten was adjusted to be about 43%, a NaOH solution was added thereto at various concentrations. The result was heat treated at a temperature of 100°C for 30 minutes, and then, a pH thereof was measured. The pH of corn gluten at various concentrations of the NaOH solution is shown in Table 4. As a result, it was confirmed that when 2% NaOH solution was used, the pH was optimal for the growth of *Bacillus.*

**[Table 4]**

| **NaOH (%)** | **pH after heat-treatment** |
|---|---|
| 0 | 3.85 |
| 0.1 | 3.85 |
| 0.2 | 3.97 |
| 0.4 | 4.3 |
| 0.5 | 4.23 |
| 1 | 4.87 |
| 2 | 6.17 |
| 4 | 8.12 |

### Example 5. Comparing protein increase effects obtained by microorganism according to enzyme

As confirmed in Example 3, when the starch-decomposing enzyme was used, the water-soluble saccharide content in corn gluten was increased. Commercially available starch-decomposing enzymes have different enzymatic activities and reaction conditions. Accordingly, they have different starch decomposition effects, water-soluble saccharide content levels, and solid-state fermentation-derived protein increase ratios. In the present experiment, by enzyme screening, a starch-decomposing enzyme being suitable for concentrating protein in corn gluten was screened out.

The enzyme screening was performed in such a manner that an enzyme adding point and a reaction temperature were varied according to characteristics of an enzyme.

In the case of a glucoamylase treatment group and a mesophilic α-amylase treatment group, the 2% NaOH solution was added to corn gluten to adjust the water content of the result to be about 43%, and the resultant corn gluten was heat treated at a temperature of 100°C for 30 minutes, and then, left in air for cooling, and treated with the respective enzymes each having a concentration of 0.1%, and reacted at a temperature of 60°C for 1 hour.

In the case of a thermophilic α-amylase treatment group, the 2% NaOH solution was added to corn gluten to adjust the water content thereof to be about 43%, and 0.1% enzyme was added thereto, and the result was heat treated at a temperature of 100°C for 30 minutes. After the heat treatment, a time for the enzyme reaction was not provided.

Bacillus *amyloliquefaciens* K2G *(Bacillus amyloliquefaciens,* accession number KCCM11471P, and see Patent No. 10-1517326) 10% (v/w source) was inoculated into corn gluten that had completely reacted with enzyme, and then, the corn gluten was fermented in a constant-temperature and constant-humidity bath at a temperature of 37°C and a humidity of 95% for 24 hours. The fermentation result was dried and milled, and an amount of protein therein was measured by using a Kjeldahl decomposition apparatus (see Table 5).

As a result of the fermentation, all the enzymes showed similar viable bacteria populations. However, they showed substantially different protein increase ratios. In the case in which an enzyme was not used although the 2% solution was added and the heat treatment was performed, the conditions were basically suitable for the growth of a microorganism, but the water-soluble saccharide content in a source material was small, leading to a protein increase of about 2%. Also, it was considered that due to their different starch decomposition effects and insufficient reaction temperature and time, the respective enzymes showed varying fermentation results. By doing so, as an enzyme that causes a relatively high protein increase ratio obtained by the decomposition of starch in corn gluten in these conditions, glucoamylase was selected.

**[Table 5]**

| Enzyme | Time (hr) | Water content (%) | Viable bacteria population (CFU/g) | Crude protein (%) | Protein increase ratio (%) |
|---|---|---|---|---|---|
| Without enzyme | 0 | 46.01% | 4.2.E+07 | 71.7 | - |
| | 16 | 38.17% | - | 73.9 | 2.2 |
| | 20 | 36.32% | - | 74.3 | 2.5 |
| | 24 | 32.81% | 9.2.E+09 | 73.9 | 2.2 |
| Glucoamylase 0.1% | 0 | 46.34% | 5.0.E+07 | 71.7 | - |
| | 16 | 39.47% | - | 79.5 | 7.8 |
| | 20 | 35.54% | - | 78.9 | 7.1 |
| | 24 | 32.84% | 7.4.E+09 | 78.7 | 7.0 |
| Thermophilic α-amylase 0.1% | 0 | 45.97% | 3.0.E+07 | 71.7 | - |
| | 16 | 35.90% | - | 75.4 | 3.7 |
| | 20 | 31.38% | - | 75.6 | 3.8 |
| | 24 | 28.42% | 9.7.E+09 | 75.7 | 4.0 |
| Mesophilic α-amylase 0.1% | 0 | 45.97% | 5.0.E+07 | 71.7 | - |
| | 16 | 34.39% | - | 75.1 | 3.4 |
| | 20 | 30.77% | - | 75.3 | 3.6 |
| | 24 | 27.01% | 1.4.E+10 | 75.8 | 4.0 |

### Example 6. Comparing fermentation patterns and qualities obtained when enzyme was used or not used

As shown in results obtained according to Example 5, after 24 hours of fermentation, there were protein increase effects due to glucoamylase and solid-state fermentation. To further identify, in addition to the protein increase effects, glucoamylase treatment effects on a fermentation process and a fermentation quality, the growth pattern of microorganism, water content change, an increase in protein, and protein degradability, and protein solubility were measured. The fermentation was performed in the same manner as in Example 5, and experimental groups were classified as a glucoamylase 0.5% treatment group and an enzyme-untreated group, and samples were harvested from the groups every four hours (see Table 6).

When not treated with an enzyme, corn gluten had about 2.5% increase in the protein content ratio due to fermentation done by microorganism. However, in the case of corn gluten that had been subjected to fermentation after the enzyme-treatment, the protein content ratio was increased as high as about 8%. This is because due to the enzyme treatment, starch in a corn gluten material was decomposed into glucose, which was then used when *Bacillus* bacteria grew. As a result, protein was relatively concentrated, leading to a protein content ratio increase effect. In this regard, when the pH of corn gluten was adjusted to a level at which a microorganism grows independently from the enzyme treatment, the viable bacteria population was at the same level. However, the enzyme treatment can be used to increase the protein content ratio in corn gluten.

Crude protein (DS content) in the corn gluten source was 71.7%, and as in Example 1, the water-soluble saccharide content, which was used to grow a microorganism, was 0.4%. Accordingly, if the water-soluble saccharide is used and the protein exists intact, the protein increase ratio would have been as small as about 0.3%. However, in fact, the protein increase ratio was greater than 2%, and according to Example 8, when the enzyme treatment was not performed, the starch content in the fermentation product was decreased compared to that in the corn gluten source. The high protein content ratio to the water-soluble saccharide content in corn gluten even when corn gluten was not treated with an enzyme may be due to an activity of amylase that is produced by a strain during the microorganism fermentation. This result shows that the fermentation by using a strain that has high amylase activities positively affects the increase in the protein content ratio.

**[Table 6]**

| Experimental groups | Time (hr) | Water content (%) | Viable bacteria population(CFU/g) | Protein (%, ds) | Protein increase ratio (%) |
|---|---|---|---|---|---|
| When not treated with enzyme | 0 | 45.33% | 2.6.E+07 | 70.51 | 0.09 |
| | 4 | 44.06% | 5.4.E+07 | 71.25 | 0.83 |
| | 8 | 41.54% | 4.2.E+09 | 71.65 | 1.23 |
| | 12 | 37.84% | 5.6.E+09 | 72.1 | 1.68 |
| | 16 | 33.41% | 3.5.E+09 | 72.72 | 2.3 |
| | 20 | 29.83% | 6.2.E+09 | 72.92 | 2.5 |
| | 24 | 25.75% | 7.9.E+09 | 72.77 | 2.35 |
| When treated with enzyme | 0 | 46.54% | 2.0.E+07 | 71.43 | 1.02 |
| | 4 | 45.03% | 2.4.E+07 | 72.77 | 2.35 |
| | 8 | 43.53% | 1.7.E+09 | 75.86 | 5.45 |
| | 12 | 40.37% | 4.3.E+09 | 77.88 | 7.47 |
| | 16 | 36.85% | 3.8.E+09 | 78.08 | 7.66 |
| | 20 | 33.67% | 5.1.E+09 | 77.89 | 7.47 |
| | 24 | 30.07% | 8.6.E+09 | 78.43 | 8.01 |

### Example 7. Comparing experimental results obtained according to enzymatic reaction

The present disclosure relates to a method of increasing the protein content in corn gluten by performing the enzyme pretreatment and the microorganism fermentation at the same time. If the fermentation is performed immediately after the enzyme treatment without a separate enzymatic reaction, the process for increasing the protein ratio in corn gluten and the process for producing corn gluten may be simplified and also, the manufacturing costs may be reduced. To confirm this assumption, the need for a separate enzymatic reaction was identified by comparing results of the following two experiments: the fermentation was performed in the same manner as in Example 5, and after the addition of enzyme, the enzymatic reaction was performed at a temperature of 60°C for 1 hour; and the fermentation was performed in the same manner as in Example 5, and without providing a time for an enzymatic reaction, the microorganism was inoculated.

As a result, there was substantially no difference in the protein increase ratio between when the time for enzymatic reaction was provided (see *with enzymatic reaction* in Table 7) and when the time for enzymatic reaction was not provided (see *without enzymatic reaction* in Table 7). This result shows that even without the time for enzymatic reaction, the enzymatic reaction had sufficiently occurred during fermentation (see Table 7).

**[Table 7]**

| With or without enzymatic reaction | Time (hr) | Water content (%) | Viable bacteria population(CFU/g) | Protein (%, ds) | Protein increase ratio (%) |
|---|---|---|---|---|---|
| Without enzymatic reaction | 0 | 45.86% | 1.45.E+07 | 72.75 | - |
| | 16 | 37.69% | 6.85.E+09 | 78.88 | 7.93 |
| | 20 | 33.97% | 1.39.E+10 | 79.36 | 8.41 |
| With enzymatic reaction | 0 | 46.47% | 2.95.E+07 | 73.71 | - |
| | 16 | 34.14% | 7.25.E+09 | 79.67 | 8.58 |
| | 20 | 30.84% | 6.15.E+09 | 79.24 | 8.15 |

### Example 8. Comparing starch content and protein content ratio according to concentration of enzyme

The relationship between the decrease in starch content and the increase in the protein content ratio in corn gluten according to the concentration of an enzyme was identified. The starch in a source material was decreased to a certain level in its amount due to the microorganism fermentation, even without the enzyme treatment. Also the greater the concentration of an enzyme, the smaller the starch content in the source material. As a result, the protein content ratio was relatively increased (see Table 8).

Meanwhile, corn gluten is a by-product that is generated when corn starch is produced, and the protein content in corn gluten may vary depending on the corn starch yield. That is, the lower protein content in corn gluten, the relatively higher starch content. Accordingly, glucose is more decomposed by the starch-decomposing enzyme, and thus, the protein content ratio increase effects due to the microorganism fermentation may increase. Table 9 shows fermentation results obtained by using a corn gluten source when the protein in corn gluten was 66% and 70%. Other than the protein content in the source, identical conditions including glucoamylase 0.1%, inoculation of *Bacillus* 10%, etc. were used in performing the fermentation. As a result, when the protein content in corn gluten was 66%, the protein was increased more. In this experiment, the starch value of the respective sources was not measured, and accordingly, it is difficult to prove that starch was absolutely greater than protein. However, it may be assumed that if the starch value is higher due to low protein content, glucose is more decomposed by enzyme, leading to a higher protein increase ratio.

**[Table 8]**

| Experimental groups | Enzyme Concentration (%) | Time (hr) | Water content (%) | Viable bacteria population (CFU/g) | Protein (%, ds) | Protein Increase ratio (%) | Glucose (%) | Starch (%) |
|---|---|---|---|---|---|---|---|---|
| Source material | - | - | - | - | 70.28 | - | 0.14 | 15.86 |
| Without enzyme treatment | 0% | 0 | 45.76% | 2.00.E+07 | - | - | - | - |
| | | 16 | 37.11% | 8.20.E+09 | 72.61 | 2.33 | - | - |
| | | 20 | 33.64% | 1.07.E+10 | 72.63 | 2.36 | - | - |
| | | 24 | 31.05% | 8.75.E+09 | 72.67 | 2.39 | 0.25 | 10.75 |
| With enzyme treatment | 0.00% | 0 | 45.76% | 5.10.E+07 | - | - | - | - |
| | | 16 | 35.49% | 6.10.E+09 | 71.86 | 1.58 | - | - |
| | | 20 | 32.35% | 7.70.E+09 | 72.03 | 1.76 | - | - |
| | | 24 | 29.99% | 7.60.E+09 | 72.53 | 2.26 | 0.25 | 11.64 |
| | 0.01% | 0 | 46.00% | 2.25.E+07 | - | - | - | - |
| | | 16 | 36.91% | 1.06.E+10 | 75.1 | 4.83 | - | - |
| | | 20 | 31.90% | 1.16.E+10 | 75.3 | 5.03 | - | - |
| | | 24 | 29.74% | 1.10.E+10 | 75.14 | 4.86 | 0.28 | 7.61 |
| | 0.05% | 0 | 46.43% | 2.90.E+07 | - | - | - | - |
| | | 16 | 38.45% | 9.70.E+09 | 76.89 | 6.61 | - | - |
| | | 20 | 34.50% | 1.18.E+10 | 77.73 | 7.46 | - | - |
| | | 24 | 30.49% | 1.02.E+10 | 77.18 | 6.91 | 0.37 | 4.43 |
| | 0.10% | 0 | 46.24% | 2.80.E+07 | - | - | - | - |
| | | 16 | 37.41% | 8.95.E+09 | 77.88 | 7.61 | - | - |
| | | 20 | 33.92% | 1.15.E+10 | 78.41 | 8.14 | - | - |
| | | 24 | 30.62% | 1.10.E+10 | 78.38 | 8.11 | 0.58 | 2.94 |

**[Table 9]**

| Experimental groups | Time (hr) | Viable bacteria population(CFU/ g) | Protein (%, ds) | Protein increase ratio (%) |
|---|---|---|---|---|
| Source protein 70% | 0 | 5.05.E+07 | - | - |
| | 16 | 1.28.E+10 | 77.893 | 7.949 |
| | 20 | 1.04.E+10 | 78.601 | 8.657 |
| | 24 | 1.21.E+10 | 78.345 | 8.401 |
| Source protein | 0 | 3.65.E+07 | - | - |
| 66% | 16 | 1.08.E+10 | 74.713 | 8.855 |
| | 20 | 1.17.E+10 | 75.089 | 9.231 |
| | 24 | 1.43.E+10 | 74.989 | 9.131 |

### Example 9. Confirming that corn gluten had been fermented by yeast

As described in the Examples above, it was confirmed that corn gluten had been fermented by *Bacillus* and had protein content ratio increase effects due to the addition of an enzyme. The inventors of the present disclosure additionally carried out experiments to confirm whether corn gluten is fermented by yeast other than *Bacillus* to compare fermentation characteristics of corn gluten according to microorganism.

In this experiment, *Saccharomyces Carlsbergensis* was used as yeast to perform fermentation. Like the fermentation by bacillus, water was added to corn gluten to adjust the water content to be about 43%, and the result was heat treated at a temperature of 100°C for 30 minutes. The heat treated corn gluten was left in air for cooling, and in the case of the enzyme-treated group, glucoamylase was used in an amount of 0.5% based on the source material, and in the case of the enzyme un-treated group, enzyme was not used, and to both groups, *S.carlsbergensis* culture was added in an amount of 10% based on the source material. The obtained result was subjected to fermentation in a constant-temperature and constant-humidity bath (a temperature of 30°C and a humidity of 95%) for 48 hours. Since the optimal growth temperature of the yeast was 30°C, the fermentation was performed at a temperature being different from that of bacillus. The fermentation time was 48 hours, since the yeast grows slower than bacillus.

Assuming that the yeast sufficiently grows in acidic conditions, the pH was not adjusted. Only, fermentation results obtained with or without the enzyme treatment were compared. The comparison results show that the yeast grows without any adjustment in the pH of corn gluten, and the protein increase ratio varied according to the enzyme treatment. Without the enzyme treatment, the water-soluble saccharide, which is used to grow microorganism, is small in an amount in corn gluten, and accordingly, fermentation-derived protein concentrating effects are relatively small and the protein increase ratio was less than 1%. However, when treated with an enzyme, corn gluten had the protein increase ratio of 9% or more (see Table 10).

**[Table 10]**

| Experimental group | Time (hr) | Water content (%) | pH | Viable bacteria population (CFU/g) | Protein (%, ds) | Protein increase ratio (%) |
|---|---|---|---|---|---|---|
| Without enzyme treatment | 0 | 46.0% | 3.92 | 6.0.E+06 | 71.76 | - |
| | 24 | 41.4% | 4.52 | 1.6.E+08 | 72.56 | 0.80 |
| | 48 | 38.5% | 4.63 | 3.0.E+08 | 71.92 | 0.16 |
| With Enzyme treatment | 0 | 45.4% | 3.97 | 8.0.E+06 | 71.76 | - |
| | 24 | 39.7% | 3.91 | 8.1.E+08 | 81.12 | 9.36 |
| | 48 | 31.2% | 3.86 | 8.6.E+08 | 81.13 | 9.37 |

### Example 10. Confirming that corn gluten had been fermented by lactic acid bacteria

As described in the Examples above, it was confirmed that corn gluten had been fermented by *Bacillus* or yeast and had protein content ratio increase effects due to the addition of glucoamylase enzyme. The inventors of the present disclosure additionally carried out experiments to confirm whether corn gluten is fermented by lactic acid bacteria other than *Bacillus* and yeast to compare fermentation characteristics of corn gluten according to microorganism.

For the fermentation by lactic acid bacteria, *Lactobacillus plantarum* was used. Like the *Bacillus* fermentation, water or 2% NaOH was added to corn gluten to adjust the water content to be about 43%. In general, Lactic acid bacteria grow in acidic or neutral conditions. However, *L.plantarum* does not grow in corn gluten, which is an acidic source material. Accordingly, corn gluten to which water had been added without the adjustment of a pH and corn gluten of which a pH had been adjusted were both used for fermentation. Like the same method used in connection with the *Bacillus* fermentation and the yeast fermentation, corn gluten was heat treated at a temperature of 100°C for 30 minutes, and after left in air for cooling, in the case of the enzyme treated group, glucoamylase was added in an amount of 0.5% based on a source material, and in the case of the enzyme-untreated group, the enzyme was not added. *L.plantarum* culture was inoculated in an amount of 10% based on the source material, and at a temperature of 37°C, anaerobic fermentation was performed. The fermentation performed for 48 hours since lactic acid bacteria also grow slower than bacillus.

As a result of the lactic acid bacteria fermentation, it was confirmed that, with or without the adding of an enzyme, lactic acid bacteria did not grow in corn gluten of which pH had not been adjusted. However, in the case of corn gluten of which a pH had been adjusted, the viable bacteria population was increased. This result shows that the growing of *L.plantarum* in corn gluten necessarily requires the pH adjustment. Also, the decrease in the pH shows that an organic acid was produced by lactic acid bacteria fermentation. However, regardless of the enzyme
treatment and the pH adjustment, all experimental groups showed no protein increase ratio effects, and it is assumed that the anaerobic fermentation did not cause protein concentrating effects. The difference between the enzyme-treated group and the enzyme-untreated group lies in that the decrease in pH is greater when a pH was controlled than when the pH was not controlled. Also, it is assumed that in the enzyme-treated group, since there are many monosaccharide components for growing lactic acid bacteria, metabolism occurred quickly and an organic acid was more generated. Meanwhile, since a pH of corn gluten was decreased due to an organic acid, which was generated by 24 hours of fermentation, to a level in which lactic acid bacteria cannot grow, the viable bacteria population in the enzyme-treated group and the pH-controlled group after 48 hours of fermentation was decreased (see Table 11).

**[Table 11]**

| Experimental group | pH adjustment | Time (hr) | Water content (%) | pH | Viable bacteria population (CFU/g) | Protein (%, ds) | Protein increase ratio (%) |
|---|---|---|---|---|---|---|---|
| Without enzyme treatment | Without pH adjustment | 0 | 44.9% | 3.9 | 1.1.E+08 | 71.76 | - |
| | | 24 | 45.4% | 3.93 | 10.E+05 or less | 71.32 | -0.44 |
| | | 48 | 45.1% | 3.92 | 10.E+03 or less | 71.48 | -0.28 |
| | With pH adjustment | 0 | 44.6% | 6.96 | 1.3.E+08 | 71.76 | - |
| | | 24 | 44.8% | 5.61 | 1.6.E+09 | 70.87 | -0.89 |
| | | 48 | 46.2% | 5.7 | 2.0.E+09 | 71.30 | -0.46 |
| With Enzyme treatment | Without pH adjustment | 0 | 45.0% | 3.9 | 9.8.E+07 | 71.76 | - |
| | | 24 | 45.5% | 3.92 | 10.E+05 or less | 72.03 | 0.27 |
| | | 48 | 45.6% | 3.9 | 8.4.E+04 | 72.55 | 0.79 |
| | With pH adjustment | 0 | 44.9% | 6.69 | 1.3.E+08 | 71.76 | - |
| | | 24 | 46.8% | 4.37 | 2.8.E+09 | 72.53 | 0.77 |
| | | 48 | 45.1% | 4.28 | 3.6.E+08 | 72.61 | 0.85 |

The major technical value of the present disclosure lies in converting starch in corn gluten into water-soluble saccharides due to an enzymatic reaction, and allowing microorganisms to use water-soluble saccharides to grow. In the case of *Bacillus* and yeast, due to aerobic growth characteristics of microorganism, saccharides are consumed and converted into CO₂, leading to the concentrated protein. However, in the case of lactic acid bacteria, even when saccharides are consumed and the microorganism grows, due to anaerobic growth characteristics of microorganism, the protein concentrating effects were not able to be obtained since an organic acid is generated. However, due to characteristics of the generated organic acid, lactic acid bacteria are highly valued as probiotics. Up to now, when corn gluten is used as a source material, due to the lack of water-soluble saccharide being able to be used for fermentation, the generation of an organic acid due to metabolism of lactic acid bacteria is limited. However, the decomposing of starch, which is the key technique of the present disclosure, contributes the metabolism of lactic acid bacteria.

### Example 11. Comparing protein degradability due to fermentation according to microorganism

To identify any difference in other index than the protein increase effects, protein degradability of corn gluten was analyzed by SDS-PAGE. Samples used for SDS-PAGE analysis were prepared by using the following method.

For each of fermentation products collected at different time points, about 100 mg of a fermentation product was suspended in a 8M urea solvent, and sonicated, and centrifuged (8000 rpm, 10 minutes). The resultant extract was subjected to BCA quantification to measure the protein content ratio, and for SDS-PAGE, the same amount of protein was loaded to identify a protein degradability pattern at various time points. The size of a marker used for SDS-PAGE was 250, 150, 100, 75, 50, 37, 25, 20, 15, or 10kDa.

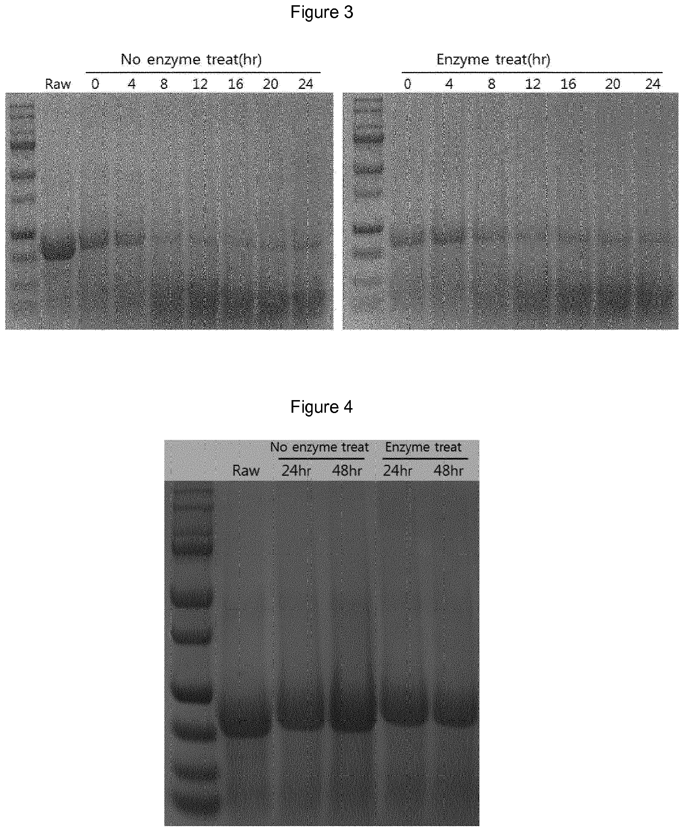

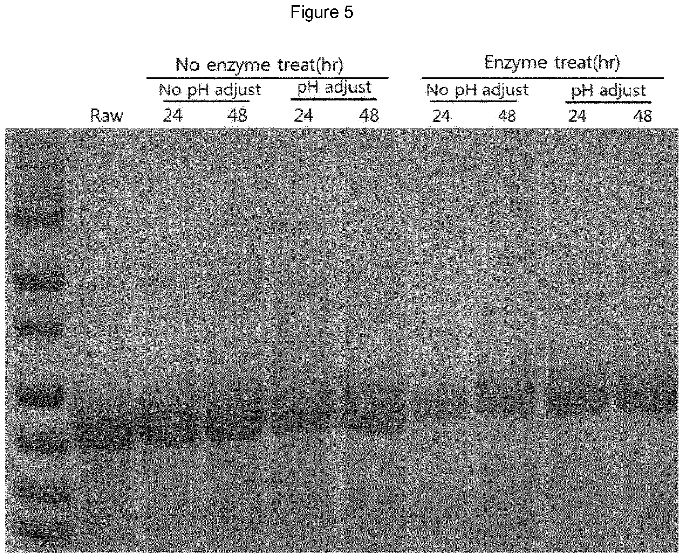

Experimental results show that protein degradability was varied according to characteristics of a microorganism. For example, in the case of the *Bacillus* group that generates protease, due to fermentation, the peptide of corn gluten source was degraded to a level of about 20kDa (see FIG. 3). However, in the case of yeast and lactic acid bacteria, which cannot generate protease, regardless of the enzyme treatment or the pH adjustment, during fermentation, the peptide in the source material was not degraded (see FIGS. 4 and 5).

The degrading of corn gluten protein into peptides by *Bacillus* fermentation may facilitate digesting of feed. Meanwhile, although in the case of yeast and lactic acid bacteria, protein degradability did not occur, since functional components, such as betaglucan existing in a cellular wall of yeast has immune-functionality, and lactic acid bacteria can be used as probiotics, it is assumed that the function of feed material may be enhanced.

When a method of concentrating protein in grain powder according to an embodiment of the present disclosure is used, the amount of water-soluble saccharide in a source material is increased by treating grain powder with enzyme, and the increased water-soluble saccharide is removed by inoculating the grain powder with bacteria or yeast and fermentation. By doing so, the protein content ratio increase effects are enhanced, and the performance of the grain powder as a protein source may be improved.

## Claims

1. A method of concentrating protein in grain powder, the method comprising:
adding a base solution to grain powder to adjust a pH that is optimal for the growth of bacteria in the grain powder;
treating the grain powder with α-amylase or glucoamylase to decompose structural carbohydrate, wherein the structural carbohydrate comprises at least one selected from the group consisting of starch, cellulose, hemicellulose, or pectin; and
inoculating the bacteria into the grain powder to perform fermentation;
wherein the bacteria are of the genus *Bacillus* or the genus *Lactobacillus,* wherein the grain powder is corn gluten.

2. The method of claim 1, wherein the fermentation is solid-state fermentation.

3. The method of claim 1 or 2, wherein the genus *Bacillus* comprises at least one strain selected from the group consisting of *Bacillus subtilis, Bacillus licheniformis, Bacillus toyoi, Bacillus coagulans, Bacillus polyfermenticus,* and *Bacillus amyloliquefaciens* K2G.

4. A method of concentrating protein in grain powder, the method comprising:
treating grain powder with α-amylase or glucoamylase to decompose structural carbohydrate, wherein the α-amylase or glucoamylase is used in an amount of 0.1 to 1 part by weight based on 100 parts by weight of the grain powder, and the structural carbohydrate comprises at least one selected from the group consisting of starch, cellulose, hemicellulose, or pectin; and
inoculating yeast into the grain powder to perform fermentation, wherein the fermentation is solid-state fermentation, and the yeast is of the genus *Saccharomyces,* and wherein the grain powder is corn gluten.

5. The method of claim 1, 2 or 3, wherein the α-amylase or glucoamylase is used in an amount of 0.1 to 1 part by weight based on 100 parts by weight of the grain powder.

## Patentansprüche

1. Verfahren zum Konzentrieren von Protein in Getreidepulver, wobei das Verfahren Folgendes umfasst:
Versetzen des Getreidepulvers mit einer alkalischen Lösung, um einen pH-Wert einzustellen, der für das Wachstum von Bakterien in dem Getreidepulver optimal ist,
Behandeln des Getreidepulvers mit α-Amylase oder Glucoamylase, um Strukturkohlenhydrat abzubauen, wobei das Strukturkohlenhydrat wenigstens eines ausgewählt aus der Gruppe Stärke, Cellulose, Hemicellulose oder Pektin umfasst, und
Beimpfen des Getreidepulvers mit den Bakterien, um eine Fermentation durchzuführen,
wobei die Bakterien Bakterien der Gattung *Bacillus* oder der Gattung *Lactobacillus* sind und wobei das Getreidepulver Maisgluten ist.

2. Verfahren nach Anspruch 1, wobei es sich bei der Fermentation um eine Festkörperfermentation handelt.

3. Verfahren nach Anspruch 1 oder 2, wobei die Gattung *Bacillus* wenigstens einen Stamm umfasst, der aus der Gruppe ausgewählt ist, die aus *Bacillus subtilis, Bacillus licheniformis, Bacillus toyoi, Bacillus coagulans, Bacillus polyfermenticus* und *Bacillus amyloliquefaciens* K2G besteht.

4. Verfahren zum Konzentrieren von Protein in Getreidepulver, wobei das Verfahren Folgendes umfasst:
Behandeln des Getreidepulvers mit α-Amylase oder Glucoamylase, um Strukturkohlenhydrat abzubauen, wobei die α-Amylase oder Glucoamylase in einer Menge von 0,1 bis 1 Gewichtsteilen basierend auf 100 Gewichtsteilen des Getreidepulvers verwendet wird und das Strukturkohlenhydrat wenigstens eines ausgewählt aus der Gruppe Stärke, Cellulose, Hemicellulose oder Pektin umfasst, und
Beimpfen des Getreidepulvers mit Hefe, um eine Fermentation durchzuführen, wobei es sich bei der Fermentation um eine Festkörperfermentation handelt und die Hefe eine Hefe der Gattung *Saccaromyces* ist und wobei das Getreidepulver Maisgluten ist.

5. Verfahren nach Anspruch 1, 2 oder 3, wobei die α-Amylase oder Glucoamylase in einer Menge von 0,1 bis 1 Gewichtsteilen basierend auf 100 Gewichtsteilen des Getreidepulvers verwendet wird.

## Revendications

1. Un procédé de concentration de protéine dans une poudre de grains,
le procédé comprenant :
l'ajout d'une solution de base à la poudre de grains afin d'adapter au mieux le pH pour la croissance des bactéries dans la poudre de grains,
le traitement de la poudre de grains avec de l'a-amylase ou de la glucoamylase pour décomposer l'hydrate de carbone structurel, l'hydrate de carbone structurel comprenant au moins un élément sélectionné dans le groupe composé d'amidon, de cellulose, d'hémicellulose ou de pectine et
l'inoculation des bactéries dans la poudre de grains pour réaliser la fermentation, les bactéries étant du genre *Bacillus* ou du genre *Lactobacillus* et la poudre de grains étant du gluten de maïs.

2. Le procédé de la revendication 1, dans lequel la fermentation est une fermentation à l'état solide.

3. Le procédé de la revendication 1 ou 2, dans lequel le genre *Bacillus* comprend au moins une souche sélectionnée dans le groupe composé de *Bacillus subtilis, Bacillus licheniformis, Bacillus toyoi, Bacillus coagulans, Bacillus polyfermenticus* et *Bacillus amyloliquefaciens* K2G.

4. Un procédé de concentration de protéine dans une poudre de grains,
le procédé comprenant :
le traitement de la poudre de grains avec de l'a-amylase ou de la glucoamylase pour décomposer l'hydrate de carbone structurel, l'a-amylase ou la glucoamylase étant utilisée dans une quantité de 0,1 à 1 part en poids sur la base de 100 parts en poids de la poudre de grains et l'hydrate de carbone structurel comprenant au moins un élément sélectionné dans le groupe composé d'amidon, de cellulose, d'hémicellulose ou de pectine et
l'inoculation de la levure dans la poudre de grains pour réaliser la fermentation, la fermentation étant une fermentation à l'état solide, la levure étant du genre *Saccharomyces* et la poudre de grains étant du gluten de maïs.

5. Le procédé de la revendication 1, 2 ou 3, dans lequel l'a-amylase ou la glucoamylase est utilisée dans une quantité de 0,1 à 1 part en poids sur la base de 100 parts en poids de la poudre de grains.
